# EUROPÄISCHE PATENTSCHRIFT

(11) **EP 0 815 148 B1**
(45) Veröffentlichungstag und Bekanntmachung des Hinweises auf die Patenterteilung: **19.05.1999**
(21) Anmeldenummer: 96906739.6
(22) Anmeldetag: 06.03.1996
(51) Int. Cl.: C08F 12/04, C08F 4/64

(54) **VERFAHREN ZUR HERSTELLUNG VON POLYMERISATEN VON VINYLAROMATISCHEN VERBINDUNGEN UNTER DRUCK IN GEGENWART VON LEICHT FLÜCHTIGEN KOHLENWASSERSTOFFEN**
PROCESS FOR PRODUCING POLYMERS OF VINYL AROMATIC COMPOUNDS UNDER PRESSURE IN THE PRESENCE OF READILY VOLATILISING HYDROCARBONS
PROCEDE DE PREPARATION DE POLYMERISATS DE COMPOSES VINYLIQUES AROMATIQUES SOUS PRESSION EN PRESENCE D'HYDROCARBURES TRES VOLATILS

(30) Priorität: 17.03.1995 DE 19509785
(43) Veröffentlichungstag der Anmeldung: 07.01.1998
(73) Patentinhaber: BASF AKTIENGESELLSCHAFT, 67056 Ludwigshafen (DE)
(72) Erfinder: WÜNSCH, Josef, D-67105 Schifferstadt (DE); FISCHER, David, D-67161 Gönnheim (DE)
(86) Internationale Anmeldenummer: EP9600939
(87) Internationale Veröffentlichungsnummer: WO9629353

(56) Entgegenhaltungen:
- EP-A- 0 421 659
- EP-A- 0 505 973
- EP-A- 0 530 796
- EP-A- 0 543 022
- EP-A- 0 554 574
- EP-A- 0 591 841
- WO-A-93/03067

## Beschreibung

Die vorliegende Erfindung betrifft Verfahren zur Herstellung von Polymerisaten von vinylaromatischen Verbindungen bei Temperaturen im Bereich von 0 bis 150°C in Gegenwart von Metallocenkomplexen als Katalysatoren.

Polymerisate von vinylaromatischen Verbindungen, insbesondere Polystyrole, finden aufgrund ihres Eigenschaftsprofils in vielen Bereichen Verwendung, beispielsweise als Verpackungsmaterialien oder als Isolierüberzüge für Metalle oder Kunststoffe, speziell bei elektrischen Anwendungen.

Aus der EP-A 312 976 ist bekannt, daß die Polymerisation von vinylaromatischen Verbindungen, speziell von Styrol oder substituierten Styrolen, in Gegenwart von Metallocenkomplexen als Katalysatoren in einem aromatischen Lösungsmittel durchgeführt wird. Dies führt dazu, daß das Lösungsmittel bei der Aufarbeitung der Polymerisate bei hohen Temperaturen abgetrennt werden muß.

Der vorliegenden Erfindung lag daher die Aufgabe zugrunde, neue Verfahren zur Herstellung von Polymerisaten von vinylaromatischen Verbindungen zur Verfügung zu stellen, die verfahrenstechnisch weniger aufwendig sind und insbesondere die energieaufwendige Abtrennung des Lösungsmittels überflüssig machen.

Demgemäß wurden Verfahren zur Herstellung von Polymerisaten von vinylaromatischen Verbindungen bei Temperaturen im Bereich von 0 bis 150°C in Gegenwart von Metallocenkomplexen als Katalysatoren gefunden, wobei man bei einem Druck von 5 bis 300 bar in Gegenwart von aliphatischen C₁- bis C₄-Kohlenwasserstoffen polymerisiert und als Cokatalysator eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen einsetzt.

Als vinylaromatische Verbindungen eignen sich besonders Verbindungen der allgemeinen Formel I 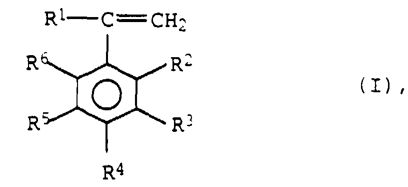 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel I eingesetzt, in denen
- R¹: Wasserstoff bedeutet
und
- R² bis R⁶: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Bei den erfindungsgemäßen Verfahren werden als Metallocenkomplexe vorzugsweise solche der allgemeinen Formel II 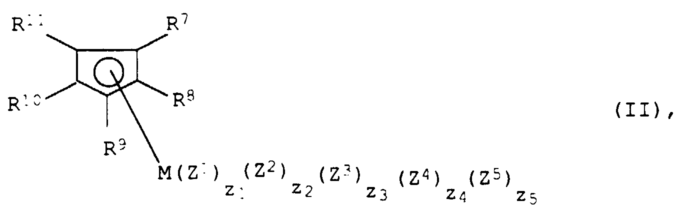 in der die Substituenten und Indices folgende Bedeutung haben:
- R⁷ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- Z¹ bis Z⁵: Wasserstoff, Halogen, C₁- bis C₁₀-Alkyl, C₆- bis C₁₅-Aryl, C₁- bis C₁₀-Alkoxy oder C₁- bis C₁₅-Aryloxy
und
- z₁ bis z₅: 0, 1, 2, 3, 4 oder 5, wobei die Summe z₁+z₂+z₃+z₄+z₅ der Wertigkeit von M abzüglich der Zahl 1 entspricht,
eingesetzt.

Besonders bevorzugte Metallocenkomplexe der allgemeinen Formel II sind solche, in denen
- M: für ein Metall der IV. Nebengruppe des Periodensystems der Elemente steht, insbesondere für Titan
und
- Z¹ bis Z⁵: C₁- bis C₁₀-Alkyl, C₁- bis C₁₀-Alkoxy oder Halogen bedeuten.

Beispiele für solche bevorzugten Metallocenkomplexe sind:
Pentamethylcyclopentadienyltitantrichlorid,
Pentamethylcyclopentadienyltitantrimethyl und
Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch eingesetzt werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Bei dem erfindungsgemäßen Verfahren wird bei einem Druck von 5 bis 300 bar, vorzugsweise 6 bis 100 bar, insbesondere 7 bis 50 bar in Gegenwart von aliphatischen C₁- bis C₄-Kohlenwasserstoffen polymerisiert. Bevorzugt sind lineare oder verzweigte aliphatische C₃- und C₄-Kohlenwasserstoffe, insbesondere Propan und Isobutan. Mischungen verschiedener aliphatischer C₁- bis C₄-Kohlenwasserstoffe können ebenfalls eingesetzt werden.

Als Cokatalysator wird eine Koordinationskomplexverbindung, ausgewählt aus der Gruppe der starken, neutralen Lewissäuren, der ionischen Verbindungen mit lewissauren Kationen und der ionische Verbindungen mit Brönsted-Säuren als Kation eingesetzt.

Als starke, neutrale Lewissäuren sind Verbindungen der allgemeinen Formel III

M¹X¹X²X³ (III)

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel III, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel IV

[(A^{a+})Q₁Q₂...Q_{z}]^{d+} (IV)

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁-bis C₁₀-Cycloalkyl, welches gegebenenfalls mit C₁-bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO-A-93/03067 genannt, bevorzugtes Kation ist das N,N-Dimethylanilinium.

Die Metallocenkomplexe können ungeträgert eingesetzt werden, vorzugsweise werden sie jedoch geträgert verwendet.

Geeignete Trägermaterialien sind beispielsweise Kieselgele, bevorzugt solche der Formel SiO₂ · bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, Polybutadien, Polycarbonate oder deren Copolymere.

Zusätzlich können bei der Polymerisation noch Aluminiumalkyle verwendet werden. Hierbei sind Trimethylaluminium, Triethylaluminium, Tri-iso-propylaluminium, Tri-n-propylaluminium, Triisobutylaluminium und Tri-n-butylaluminium besonders geeignet, insbesondere jedoch Triisobutylaluminium.

Es hat sich als vorteilhaft erwiesen, wenn das Mol-Verhältnis von der vinylaromatischen Verbindung zum Cokatalysator im Bereich von 10²:1 bis 10⁷:1, vorzugsweise im Bereich von 10³:1 bis 10⁶:1 liegt. Das Mol-Verhältnis von Cokatalysator zum Metallocenkomplex liegt vorzugsweise im Bereich von 10⁻²:1 bis 10⁷:1, insbesondere im Bereich von 10²:1 bis 10⁵:1.

Das Molverhältnis von der vinylaromatischen Verbindung zu den aliphatischen C₁- bis C₄-Kohlenwasserstoffen liegt vorzugsweise im Bereich von 5 : 1 bis 10⁴ : 1, insbesondere im Bereich von 10 : 1 bis 10³ : 1.

Wird ein Aluminiumalkyl verwendet, so hat sich ein Mol-Verhältnis von Aluminiumalkyl zum Metallocenkomplex von 10.000:1 bis 10:1, vorzugsweise von 1000:1 bis 100:1 also besonders geeignet erwiesen.

Geeignete Polymerisationstemperaturen liegen im Bereich von 0 bis 150°C, vorzugsweise von 10 bis 100°C, Polymerisationszeiten können im Bereich von 0,1 bis 24 Stunden, vorzugsweise von 0,5 bis 6 Stunden liegen.

Vorzugsweise geht man nun bei dem erfindungsgemäßen Verfahren so vor, daß man zu dem Metallocenkomplex, vorzugsweise in einem Lösungsmittel, wie Toluol, einen mit Trimethylaluminium modifizierten SiO₂-Träger gibt. Bei der eigentlichen Polymerisation geht man vorzugsweise so vor, daß man die vinylaromatische Verbindung mit dem aliphatischen C₁- bis C₄-Kohlenwasserstoff vorlegt. Dann wird mit Aufpressen des aliphatischen C₁- bis C₄-Kohlenwasserstoffs bei einem Druck von 5 bis 300 bar der geträgerte Katalysator eingeführt. Bei einer Temperatur von 0 bis 150°C startet man die Polymerisation nach einem Zeitraum von vorzugsweise 0,2 bis 120 Minuten durch Zugabe des Cokatalysators und läßt dann 0,1 bis 24 Stunden polymerisieren. Dann wird die Temperatur gesenkt und auf einen Druck von rund 1 bar entspannt. Das erhaltene Polymerisat wird abgetrennt, gewaschen und getrocknet.

Das erfindungsgemäße Verfahren zeichnet sich dadurch aus, daß es technisch wenig aufwendig ist, die entstehenden Polymerisate sind syndiotaktisch und eignen sich insbesondere zur Verwendung von Formmassen in elektrischen oder hochtemperaturbeständigen Anwendungen. Die Molmassen der nach dem erfindungsgemäßen Verfahren hergestellten Polymerisate liegen im Bereich von 10.000 bis 10.000.000 g/mol, vorzugsweise von 50.000 bis 1.000.000 g/mol.

### Beispiele

### Herstellung von syndiotaktischem Polystyrol

### Beispiel 1 - Katalysatorträgerung

In einem trockenen und mit Argon gespülten Reaktor wurden 4,0 kg SiO₂ (Fa. Grace, SG 332-50 µ, 5 Gew.-% H₂O) in 30 l Heptan suspendiert und auf 18°C thermostatiert. Innerhalb von 60 min wurden zu dieser Suspension 16,81 mmol Pentamethylcyclopentadienyltitantrimethyl gelöst in 4,92 l Toluol zugetropft, wobei die Temperatur 30°C nicht überstieg. Nach vollständiger Zugabe wurde noch 60 min gerührt. Danach wurde bei 50°C im Vakuum das Lösungsmittel entfernt. Es entstand ein gelbes rieselfähiges Pulver.

### Beispiel 2 - Polymerisation von Styrol

In einem mit Stickstoff inertisierten 1 l Autoklav wurden 0,6 mol Styrol (62,5 g) in 400 ml Isobutan vorgelegt. 1,1225 g (5*10⁻⁵ molar an Pentamethylcyclopentadienyltitantrimethyl) des Katalysators aus Beispiel 1 wurden mit Aufpressen des Isobutans bis zu einem Druck von 10 bar in den Autoklav eingeführt. Zusätzlich wurden 0,793 g (4*10⁻³ mol) Triisobutylaluminium in den Autoklav gegeben. Die Innentemperatur wurde auf 50°C einreguliert und man startete die Polymerisation nach einem definierten Zeitpunkt t durch die Zugabe von 25,6 mg (5*10⁻⁵ mol) B(C₆F₅)₃. Nach einer Polymerisationszeit von 2 Stunden wurde die Innentemperatur auf 25°C gesenkt und auf Normaldruck entspannt. Das erhaltene Polymere wurde mit Methanol gewaschen und bei 50°C im Vakuum getrocknet. Das Molekulargewicht wurde durch GPC (Gelpermeationschromatographie) in 1,3,5-Trichlorbenzol als Lösungsmittel bei 120°C bestimmt. Der syndiotaktische Anteil wurde durch ¹³C-NMR bestimmt.

| | t [min] | Molekulargewicht M_{w} (Gewichtsmittelwert) | Verteilungsbreite M_{w}/Mₙ | syndiotaktischer Anteil |
|---|---|---|---|---|
| Beispiel 2a | 5 | 380 200 | 1,8 | > 96 % |
| Beispiel 2b | 30 | 254 900 | 2,1 | > 96 % |
| Beispiel 2c | 60 | 271 800 | 2,2 | > 96 % |

## Patentansprüche

1. Verfahren zur Herstellung von Polymerisaten von vinylaromatischen Verbindungen bei Temperaturen im Bereich von 0 bis 150°C in Gegenwart von Metallocenkomplexen als Katalysatoren, dadurch gekennzeichnet, daß man bei einem Druck von 5 bis 300 bar in Gegenwart von aliphatischen C₁-bis C₄-Kohlenwasserstoffen polymerisiert und als Cokatalysator eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen einsetzt.

2. Verfahren nach Anspruch 1, dadurch gekennzeichnet, daß als vinylaromatische Verbindungen Verbindungen der allgemeinen Formel I 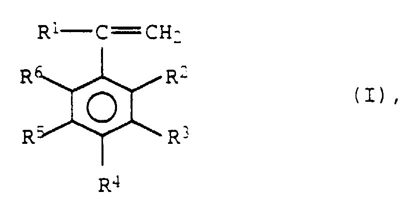 in der die Substituenten folgende Bedeutung haben:
R¹ Wasserstoff oder C₁- bis C₄-Alkyl,
R² bis R⁶ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen
eingesetzt werden.

3. Verfahren nach den Ansprüchen 1 bis 2, dadurch gekennzeichnet, daß als vinylaromatische Verbindungen der allgemeinen Formel I solche eingesetzt werden, in denen
R¹ Wasserstoff bedeutet
und
R² bis R⁶ für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen.

4. Verfahren nach den Ansprüchen 1 bis 3, dadurch gekennzeichnet, daß man in Gegenwart von linearen oder verzweigten aliphatischen C₃- oder C₄-Kohlenwasserstoffen polymerisiert.

## Claims

1. A process for preparing polymers of vinylaromatic compounds at from 0 to 150°C in the presence of metallocene complexes as catalysts, wherein the polymerization is carried out at a pressure of from 5 to 300 bar in the presence of aliphatic C₁-C₄-hydrocarbons using a coordination complex selected from the group consisting of strong, uncharged Lewis acids, ionic compounds having Lewis acid cations and ionic compounds having Brönsted acids as cations as cocatalyst.

2. A process as claimed in claim 1, wherein the vinylaromatic compounds used are compounds of the formula I 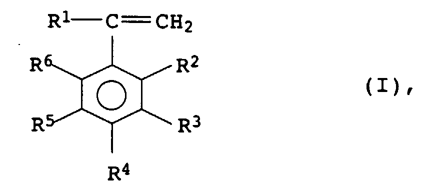 where the substituents have the following meanings:
R¹ is hydrogen or C₁-C₄-alkyl,
R² to R⁶ are, independently of one another, hydrogen, C₁-C₁₂-alkyl, C₆-C₁₈-aryl, halogen or two adjacent radicals together form a cyclic group having from 4 to 15 carbon atoms.

3. A process as claimed in claim 1 or 2, wherein the vinylaromatic compounds of the formula I which are used are ones in which
R¹ is hydrogen
and
R² to R⁶ are hydrogen, C₁-C₄-alkyl, chlorine or phenyl or two adjacent radicals together form a cyclic group having from 4 to 12 carbon atoms.

4. A process as claimed in any of claims 1 to 3, wherein the polymerization is carried out in the presence of linear or branched aliphatic C₃-C₄-hydrocarbons.

## Revendications

1. Procédé de préparation de polymères de composés vinyliques aromatiques à des températures de l'ordre de 0 à 150°C, en présence de complexes de métallocène comme catalyseurs, caractérisé en ce que, à une pression de 5 à 300 bar, on effectue une polymérisation en présence d'hydrocarbures en C₁ à C₄ aliphatiques, et en ce que, comme co-catalyseur, on met en oeuvre un composé complexe de coordination, choisi parmi le groupe des acides de Lewis neutres, forts, des composés ioniques avec des cations d'acides de Lewis et des composés ioniques avec des acides de Brönsted, comme cations.

2. Procédé suivant la revendication 1, caractérisé en ce que, comme composés vinyliques aromatiques, on met en oeuvre des composés de la formule générale I 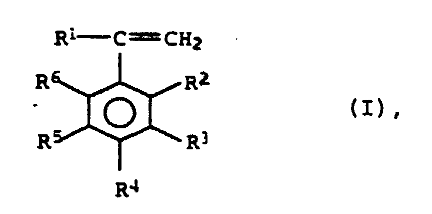 dans laquelle les substituants ont la signification suivante :
R¹ hydrogène ou alkyle en C₁ à C₄,
R² à R⁶ indépendamment l'un de l'autre, hydrogène, alkyle en C₁ à C₁₂, aryle en C₆ à C₁₈, halogène, deux radicaux voisins pouvant former conjointement des groupes cycliques présentant 4 à 15 atomes de C.

3. Procédé suivant l'une des revendications 1 et 2, caractérisé en ce que, comme composés vinyliques aromatiques de la formule générale I, on met en oeuvre ceux dans lesquels
R¹ représente de l'hydrogène
et
R² à R⁶ représentent de l'hydrogène, de l'alkyle en C₁ à C₄, du chlore ou du phényle, deux radicaux voisins pouvant former conjointement des groupes cycliques présentant 4 à 12 atomes de C.

4. Procédé suivant l'une des revendications 1 à 3, caractérisé en ce qu'on effectue la polymérisation en présence d'hydrocarbures en C₃ ou en C₄ aliphatiques, linéaires ou ramifiés.
